(19) Europäisches Patentamt
European Patent Office
Office européen des brevets

(11) **EP 4 521 327 A1**

(12) **EUROPEAN PATENT APPLICATION**

(43) Date of publication:
**12.03.2025 Bulletin 2025/11**

(21) Application number: **24199603.2**

(22) Date of filing: **10.09.2024**

(51) International Patent Classification (IPC):
**G06Q 30/0203** (2023.01)  **G06N 20/00** (2019.01)
**G06Q 30/0242** (2023.01)

(52) Cooperative Patent Classification (CPC):
**G06Q 30/0203; G06N 20/00; G06Q 30/0245**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.09.2023 US 202363537674 P
13.08.2024 US 202418803185**

(71) Applicant: **LoopMe Innovation Limited
London EC1M 4AH (GB)**

(72) Inventors:
• **LOKTIONOVA, Yuliia**
  EC1N 8FH London (GB)
• **UPSTONE, Stephen**
  EC1N 8FH London (GB)
• **VAN DE BERGH, Marco**
  EC1N 8FH London (GB)
• **NEWNHAM, Leonard**
  EC1N 8FH London (GB)

(74) Representative: **Haseltine Lake Kempner LLP
One Portwall Square
Portwall Lane
Bristol BS1 6BH (GB)**

(54)  **ASSESSMENT PLATFORM AND METHOD**

(57)    In examples, an assessment platform comprises a memory configured to store a trained machine learning model, wherein the model has been trained using (i) data indicative of user response to data content to which a plurality of users have been exposed and (ii) context data indicative of a context in which the data content was exposed to each user, and wherein the model is trained to determine a response score indicative of a predicted level of user response to data content. The platform further comprises a data receiving module to receive a plurality of requests for content, each request associated with context data; a prediction module to use the model to determine a predicted response score for requests; an assignment module to assign the request to a control group or a behaviour prediction group, wherein when the request is assigned to the behaviour prediction group, the prediction module is to determine a predicted response score for the request; a monitoring module to receive data indicative of user reactions to items of content, and to compare a level of user reaction associated with requests assigned to the control group to those associated with requests assigned to the behaviour prediction group; an assessment module configured to assess the performance of the platform to provide a platform score; and a transmission module configured to, based on the predicted response score for the request and the platform score, determine and execute a processing plan for each request.

Assessment Platform 100

Processing Circuitry 102

| Data Receiving Module 108 | Prediction Module 110 |
| Assignment Module 112 | Monitoring Module 114 |
| Assessment Module 116 | Transmission Module 118 |

Control Group Module 120

Survey Module 122

Training Module 124

Memory 104

Trained Machine Learning Model 106

Fig. 1

Processed by Luminess, 75001 PARIS (FR)

**Description**

BACKGROUND

Embodiments of this invention provide an assessment platform and method. In some examples, embodiments may control data flow between devices.

SUMMARY OF INVENTION

In some examples herein, transmission of data may be controlled or adapted based on an output of a trained machine learning model and an indication of the standard of performance of the system including the machine learning model. In particular, a processing plan for data may be formulated based on a score generated by a trained machine learning model with respect to a possible recipient of the data (a predicted response score) and a level of user reaction, which is used to assess the performance of the system. In some examples, the model may be trained and validated such that it is applicable across a range of different data categories.

According to one aspect, there is provided an assessment platform, which comprises processing circuitry. The platform comprises a trained machine learning model, for example stored in a memory thereof, wherein the model has been trained using training data comprising (i) data indicative of user responses to data content to which a plurality of users has been exposed and (ii) context data indicative of a context in which the data content was exposed to each of the users. The model is trained to determine a user response score indicative of a predicted level of user response to data content. The prediction is made based on an input comprising context data indicative of the context in which the data content is to be exposed to a user.

For example, as set out in greater detail below, the data indicative of user responses may for example comprise data indicative of interaction with items of data content e.g. clicks, determination of gaze direction, duration of time for which the content was exposed to a user, survey data (e.g. a user response to a survey asking if they recall an item of data content and/or any indication that they responded to a message therein), browsing behaviour, clicks, clickthroughs, an indication of interest in the data content or the like. The training data may relate to the context data and data indicative of user responses associated with each of a plurality (e.g. thousands) of data exposure events.

For example, as set out in greater detail below, the context may comprise any or any combination of: a website or software application within which the content is to be displayed or otherwise exposed, user device data (e.g. whether the content is to be exposed on a phone, tablet or desktop computer, or some other computing device), information about the user, or the like.

The platform further comprises a data receiving module configured to receive a plurality of requests for content from user devices, wherein each request is associated with context data indicative of a context in which the content is to be exposed to a user. The requests for content may be received directly from user devices or via one or more intermediary devices.

The platform further comprises a prediction module configured to use the trained machine learning model to determine a predicted response score for requests based on the context associated therewith. This may for example comprise a numerical output, wherein a higher number may be indicative of a higher level of anticipated response compared to a lower number (or vice versa).

The platform further comprises an assignment module configured to assign the request to one of a control group or a behaviour prediction group. When the request is assigned to the behaviour prediction group, the prediction module is configured to determine a predicted response score for the request. In some examples, as set out below, the requests in the control group may be assigned a 'dummy' response score (e.g. randomly, and/or based on determined predicted response scores), although this need not be the case in all examples.

The platform further comprises a monitoring module to receive data indicative of user reactions to items of content exposed to a plurality of users in response to the requests, and to compare a level of user reaction associated with requests assigned to the control group with a level of user reaction associated with requests assigned to the behaviour prediction group. For example, the data indicative of user reactions may comprise any or any combination of the data indicative of user responses to data content as described above. The data indicative of user reactions may be received directly from user devices, or via at least one intermediary device such as a server (which may comprise a data distribution server) or the like.

The platform further comprises an assessment module configured to assess the performance of the platform based on the comparison to provide a platform score. For example, this may allow a determination to be made as to whether the response of the behaviour prediction group exceeds the level of reaction of the control group, for example to a statistically significant and/or predetermined degree.

The platform further comprises a transmission module configured to, based on at least one of the predicted response score for the request and the platform score, determine and execute a processing plan for each request.

As will be further explained with reference to examples below, this allows the performance of the platform to be taken into account when processing requests. For example, when it is determined that the model is performing well, the predicted response score can be relied upon as accurate and/or that thresholds for processing plans are set appropriately, as further explained below. However, if the model is performing relatively poorly, the predicted response score may be associated with a relatively large error margin and/or adjustment to the thresholds may be appropriate. This can be incorporated into subsequent processing of the request such that appropriate actions can be taken, as set out in greater detail below.

In some examples, the processing plan may comprise associating the prediction score with the request, and forwarding or replying to the request with the predicted response score.

In some examples, the transmission module is configured to determine if the predicted response score meets a first threshold. The processing plan may be determined based on whether or not the first threshold is met. In one example, the processing plan comprises forwarding the request to a data provision server, wherein the data provision server is configured to provide items of data content to user devices, if the predicted response score meets the first threshold, and, if the predicted response score does not meet the first threshold, not forwarding the request for content to the data provision server.

In this way, the platform can act as a filter, only forwarding on requests which are expected to result in a predetermined level of response.

In some such examples, the processing plan for requests assigned to the control group (which may not be associated with a predicted response score) may be to always transmit such requests.

In another example, if the predicted response score meets the first threshold, the transmission module may determine and execute a processing plan comprising sending a recommendation to a data provision server to provide an item of data content in response to the request, wherein the data provision server is configured to provide items of data content to user devices, and if the predicted response score does not meet the first threshold, not send a recommendation with respect to the request for content to the data provision server. In such cases, not sending the recommendation may comprise not sending any indication to the data provision server, whereas in other examples, it may comprise sending an acknowledgement of the request, but no recommendation, or a recommendation not to provide an item of data content in response to the request. It may be noted that, in some examples, the request may be received via the data provision server and in such cases, sending a response may be useful to inform the data provision server that the request has been received and processed, even if this did not result in a recommendation to provide data.

In some such examples, the processing plan for requests assigned to the control group (which may not be associated with a predicted response score) may be to (always) send a recommendation to provide items of data content in response to such requests.

In some examples, the first threshold comprises a threshold based on the distribution of predicted response scores. For example, a distribution of the scores may be determined and requests associated with scores in the top quartile, or top decile (10%) or the like may be determined to meet the first threshold. The first threshold may be configurable and/or adaptable. Providing a threshold based on the distribution may ensure that at least some requests are deemed to meet the first threshold, and therefore that some recommendations/requests are transmitted, while providing a practical way to identify higher scoring requests. In other examples, the first threshold may be determined based on the absolute value of the score (e.g. where the score may be between 0 and 100, scores above 80 may be determined to meet the first threshold).

In some examples, the assessment module is further configured compare the platform score to a second threshold, and, if the platform score does not meet the second threshold, adjust the first threshold. In this way, the processing plan may be determined based on both the platform score and the predicted response score.

For example, if it is determined that the model is performing well, the threshold may be set at a moderate level. However, if the model is performing relatively poorly the threshold may be increased.

The second threshold may relate to any predetermined metric indicative of a difference in reaction levels between the two groups and the second threshold may be a target difference between the groups.

In some examples, an 'uplift' metric may be defined as:

$$\text{Uplift} = \frac{behaviour\ prediction\ group\ performance}{control\ group\ performance} - 1$$

where performance can be defined by any metric, for example any or any combination of user reactions or responses described above. The uplift in this case serves as the score for the platform performance.

In other examples, the score may be determined in some other way. For example, the performance from the behaviour prediction group may be intended to exceed that of the control group by a predetermined factor, wherein the predetermined factor is the second threshold, and the actual factor is the score.

The score may be reevaluated periodically, in some examples based on items of data content distributed and/or use reaction notifications received in a predetermined time period, which may be a rolling time period (e.g. the last day, or the last hour, or the like) to allow the system to be responsive to changes in behaviour in the behaviour prediction group and/or in the control group.

To consider an example in which the platform acts as a filter for requests, the score may be based on a relative reaction level between the requests assigned to the control group and the requests assigned to the behaviour prediction group which are forwarded based on the predicted response score meeting the threshold. The first threshold may initially be set based on any criteria, for example a desired minimum response uplift, score or probability which indicates that the data item is relatively likely to be of interest and/or use to the end user, and which balances data transmission resources, such that data which is unlikely to be relevant to a user data is not sent at excessive levels. However, if it is determined that the actual reaction level to data items provided in response to requests from the behaviour prediction group does not exceed, or does not sufficiently exceed, the reaction level to data items provided in response to requests from the control group, then it may be determined that the model predictions are inaccurate or that the thresholds are too low. In such cases, increasing the first threshold (e.g. from the top quartile to the top decile) may in effect compensate for the performance of the platform and achieve the aim that transmission of data which is irrelevant to the users is controlled to be at an acceptable level.

In some examples, the assessment module may adjust the first threshold by identifying a level of user reaction which results in the second threshold being met and setting the first threshold to that level.

In some examples, the assessment platform may further comprise a control group module, wherein the control group module is to assign a value to requests assigned to the control group based on a random number drawn from a distribution of predicted response scores. The distribution of predicted response scores may comprise a distribution of predicted response scores above a threshold (e.g. above the first threshold, or the current first threshold). In other examples, the value may for example be determined from an average (e.g. mean or median) value and a standard deviation determined from a set of predicted response scores, for example those determined over a predetermined period of time, such as the last 24 hours. The values of the dummy scores may have approximately the same distribution of scores as the predicted response distribution. This may be a normal distribution with a mean and standard deviation, or it may be some other distribution. In this way, the control group module may assign a dummy 'score' to the requests assigned to the control group. This may allow requests in the control group to be subsequently processed in a manner which is identical to the requests in the behaviour prediction group, which may improve the impartiality of the result. In particular, in some examples, the processing plan may comprise forwarding requests and/or sending a recommendation or reply to a request in which the reply or forwarded request comprises the predicted response score or, in the case of requests assigned to the control group, the assigned value which serves as a dummy predicted response score. In other words, assigning a score to requests in the control group (for example randomly, or based on a distribution of scores generated using the model, but not actually applying the model to the request) may allow for a degree of single/double blind methodology to be embedded in the method.

In some examples, the context data comprises one or more of: end user device data, data content data, website data, mobile app data, network data, and privacy data. In particular examples, the context data does not include end user personal data and/or does not include personally identifiable information (PII) regarding the end user. Storing such data is onerous for a system operator, and providing a platform which does not require or use such data is advantageous in terms of increasing user privacy and reducing requirements on the platform operator. Moreover, reliance on such data may limit the distribution of data items as, if such data were to be required, this would limit the applicability of the method to users who had consented to its use.

In some examples, the data indicative of user responses to data content to which a user has been exposed and/or user reactions comprise any or any combination of: user responses to a survey, user interactions with the item of data content (e.g. clicks, or 'clickthroughs' to websites provided in the item of data content), a duration of user interactions with an item of data content, a response to the data (e.g. visiting a related website, for example via a clickthrough, or independently and in some examples taking one or more actions on that website) browsing behaviour, an indication of interest in the data content, such as signing up for additional information, or the like. In some examples, the data indicative of user responses comprises survey data while the data indicative of user reactions does not. As survey data may generally be gathered over a longer period of time, using possibly more immediate sources of data (e.g. clicks) may allow a rapid response to changes in performance. In some examples, the data indicative of user responses to data content may comprise a binary value for each user response, as is set out in greater detail below.

In some examples, the assessment platform comprises a survey module and/or a training module. Such a survey module may be configured to send a request for a response to each of a plurality of surveyed end user devices, wherein the request for a response comprises a request for a response to the item of data content; and receive a response to the request from each of a plurality of surveyed end user devices and store the response in association with context data indicative of a context in which the item of data content was exposed to the end user as training data. For example, a survey response may be a binary value, or maybe translated to a binary value for example from a score based on a threshold (e.g.

for a survey which could result in a score of 0-5, scores of 0, 1 and 2 may be translated to 0 whereas scores of 3, 4 and 5 may be translated to 1). Such a binary value may be indicative of a positive or negative response.

A training module may be configured to train the machine learning model based on the training data. Such training data may be collected from previously distributed data items. In some examples, the previously distributed data items comprise different data to the item of data content which may be distributed in response to a request under assessment. For example, there may be multiple data distribution programs, each associated with a particular data content. That data content may be distributed to a plurality of users during each data distribution program. In some examples, the training data may comprise data indicative of user responses to programs relating to different data content, and preferably to diverse subject matter, as this may allow for better generalisation of the trained model. For example, the programs may be selected such that different programs are likely to distribute data which appeals to, or is directed to, people in different socioeconomic groups and/or different geographical regions, or are diverse in any other way, which may be determined or inferred from context data.

For example, the training data may be gathered from hundreds (e.g. at least 200) data distribution programs. In some examples, at least a threshold number of user responses may be acquired before a program is used as the source of training data. For example, the threshold may be 1000 responses (e.g. 1000 survey responses). Such training data volumes may be suited to be used with boosted ensemble models, such as xgboost, CatBoost or Gradient Boosting Machine (GBM) models. The training data may comprise a plurality of training data entries, each comprising combination of (i) variables indicative of values for a predetermined set of context data extracted from a request and (ii) at least one variable indicative of a user response to data resulting from that a request. In some examples, there may be up to around 50 variables indicative of context data extracted from a request, and one binary value indicative of a user response to data, which may in some examples comprise a survey response. For example, the set of context data for a particular training data entry may comprise: [user location, user device type, context of data exposure... etc] and the corresponding variables for a particular request may be ["France", "iPhone 11", "www.nnn.com",...]. The variable indicative of a user response for that training data entry may comprise a value, for example a binary value, associated with the response to the data exposed to the user in that context.

Other machine learning techniques, such as support vector machines or Deep Learning networks may be used in other examples, although these may typically require more data than the minimum amounts of training data described above.

In some examples, the model may be trained using data from a first set of data distribution programs and validated, or tested, using response data gathered from a data distribution program which is not included in the first set of data distribution programs. Assuming the model passes the validation (i.e. the predicted response scores sufficiently closely models to the actual response levels), it may be assumed that the model is suitably generic. Testing may for example utilise Area Under the Curve (AUC) techniques. Thus, in some examples, data relating to a particular data distribution program may be assigned to one of the training data or the validation/testing data, but not split between the two. The request being assessed by the trained model to determine a predicted response score may relate to yet another data distribution program.

The training data and/or the validation data may originate from a first set of users, and used to process requests from a second set of users, wherein there need not be an overlap between the sets of users (although in some cases, there may an overlap, for example a coincidental overlap).

According to a second aspect of the invention, there is provided a method of assessing requests for data comprising, by processing circuitry: receiving a plurality of requests for content from user devices, wherein each request is associated with a context in which the content is to be exposed to a user of that device and assigning the request to one of a control group or a behaviour prediction group. For requests assigned to the behaviour prediction group, the method comprises determining a predicted response score for each request using a trained machine learning model based on the context associated therewith, wherein the model has been trained using training data comprising (i) data indicative of user response to data content to which users have been exposed and (ii) context data indicative of a context in which the data content was exposed to each user, and wherein the model is trained to determine a response score indicative of a predicted level of user response to data content based on an input, the input comprising context data indicative of the context in which the data content is to be exposed to a (particular) user. The method further comprises receiving data indicative of user reactions to items of content exposed to a plurality of users in response to requests in the control group and the behaviour prediction group, comparing a level of user reaction associated with requests assigned to the control group with a level of user reaction associated with requests assigned to the behaviour prediction group; assessing the performance based on the comparison to provide a platform score; determining, based on at least one of the predicted response score for the request and the platform score, a processing plan for each request; and executing the processing plan for each request.

In some examples, the method may be carried out by the assessment platform described in relation to the first aspect of the invention.

The context data, the data indicative of user response to data content to which a user has been exposed and/or the data indicative of user reactions may comprise any of the features discussed in relation to the first aspect of the invention.

In some examples, the method further comprises determining if the predicted response score meets a first threshold.

In some such cases, the processing plan comprises: if the predicted response score meets the first threshold, forwarding the request to a data provision server, wherein the data provision server is configured to provide items of data content to user devices; and if the predicted response score does not meet the first threshold, not forwarding the request for content to the data provision server. In other such cases, the processing plan comprises: if the predicted response score meets the first threshold, sending a recommendation to a data provision server to provide an item of data content in response to the request, wherein the data provision server is configured to provide items of data content to user devices, and if the predicted response score does not meet the first threshold, not sending a recommendation to provide items of data content to user devices in relation to the request for content to the data provision server.

In some examples, the first threshold comprises a threshold based on the distribution of predicted response scores, as described in relation to the first aspect of the invention.

In some examples, the method further comprises scoring the platform performance based on the comparison to determine a platform score; comparing the platform score to a second threshold, and, if the platform score does not meet the second threshold, adjusting the first threshold, as described in relation to the first aspect of the invention. In some examples, the method further comprises adjusting the first threshold by identifying a level of user reaction which results in the second threshold being met and setting the first threshold to that level, as described in relation to the first aspect of the invention.

In some examples, the method further comprises assigning a value to requests assigned to the control group based on a random number drawn from a distribution of predicted response scores. The distribution of predicted response scores may comprise a distribution of predicted response scores above a threshold, which may be the first threshold, as described above.

In some examples, the method may further comprise sending a request for a response to each of a plurality of surveyed end user devices, wherein the request for a response comprises a request for a response to the item of data content; receiving a response to the request from each of a plurality of surveyed end user devices; storing the response in association with context data indicative of a context in which the item of data content was exposed to the end user as training data; and training the machine learning model based on the training data.

According to a third aspect of the invention, there is provided a machine readable medium associated with a processor, the machine readable medium storing instructions which, when executed, cause the processor to carry out the method of the second aspect of the invention.

According to further aspects of the invention, there is provided a machine readable medium associated with a processor, the machine readable medium storing instructions which, when executed, cause the processor to act as the assessment platform of the first aspect of the invention.

Features described in relation to one aspect of the invention may apply, mutatis mutandis, to any other aspect of the invention.

BRIEF DESCRIPTION OF THE FIGURES

The following figures depict various embodiments for purposes of illustration only. One skilled in the art will readily recognize from the following discussion that alternative embodiments of the apparatus and methods illustrated herein may be employed without departing from the principles described herein.

Figure 1 is a drawing of an assessment platform according to an example.
Figure 2 is a drawing of an environment comprising the assessment platform, an end user device, a content data server, and a data requesting server.
Figures 3, 4A, 4B and 5 are flow charts of a methods of determining processing plans for requests.
Figure 6 is a flow chart of a method of training a model.
Figure 7 is an example of a machine-readable medium in association with a processor.

DETAILED DESCRIPTION

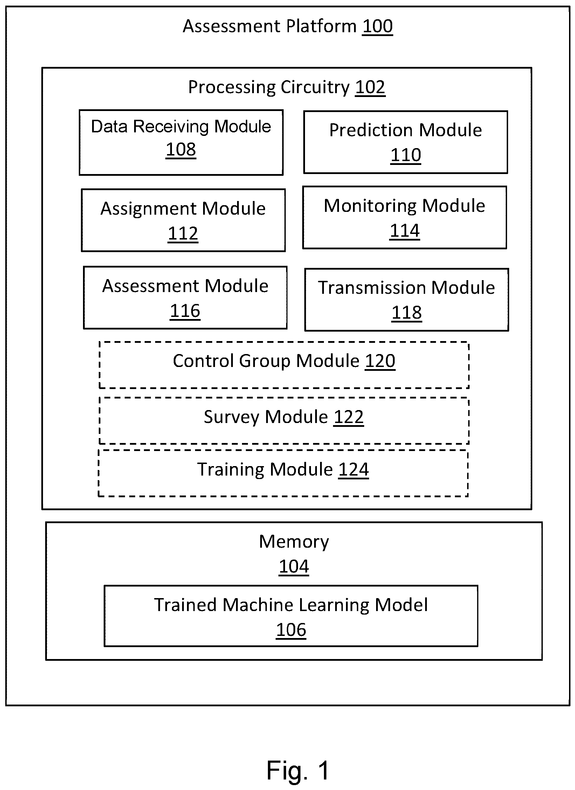

Figure 1 shows an example of an assessment platform 100, which comprises processing circuitry 102 and a memory 104. A trained machine learning model 106 is stored in the memory 104, wherein the model has been trained using training data comprising (i) data indicative of user response to data content to which users have been exposed and (ii) context data indicative of a context in which the data content was exposed to each user. The model 106 has been trained to determine a user response score indicative of a predicted level of user response to data content based on an input, wherein the input comprises context data indicative of the context in which the data content is to be exposed to a particular user, following a request for content originating from a device associated with that user.

In this example, the model 106 has been trained using boosted ensemble techniques. The training data is collected from previously distributed data items. In this example, the data content providing the data indicative of user responses and the context data was taken from a plurality (at least 200) different data distribution programs, wherein each program related to the distribution of different underlying data content. In this example, the subject matter of the data content was different between different programs. In other examples, an intended use of the data content and/or user profile associated with users may be different for different programs. In this example, in each program, particular (or similar) data is distributed to a plurality of users, and at least a threshold number of user responses (e.g. 1000) are acquired before a data distribution program is used as the source of training data.

For example, as set out in greater detail below, the data indicative of user response may for example comprise data indicative of interaction with items of data content (e.g. clicks, determination of gaze direction), duration of time for which the content was exposed to a user, a 'click through' to a website linked in the data content (and/or actions taken on the website), independent navigation to a website related to the data content and/or actions taken on such a website, survey data (e.g. a user response to a survey asking if they recall an item of data content, or are likely to take a reaction in response thereto and/or any indication that they responded to a message therein) or the like.

The platform 100 further comprises a data receiving module 108 which is configured to receive a plurality of requests for content from user devices, wherein each request is associated with a context in which the content is to be exposed to a user. For example, the user devices may comprise mobile telephones, tablets, desk top computers, laptop computers, wearable devices such as smart watches, Smart Televisions, Smart assistants, Internet of Things (IoT) devices, or the like. For example, the requests may be received through one or more of an application programming interface ("API"), a communication port (COM), Common Object Request Broker Architecture (CORBA), Enterprise JavaBeans (EJBs), and the like.

The requests for content may be received directly from user devices or via one or more intermediary devices. In some examples, the requests for content may be received via a data provision server. In other examples, they may be received via a data requesting server.

The requests comprise context data, which may for example comprise one or more of end user personal data, end user device data, display data, content data, website data, mobile app data, network data, and privacy data. In some examples, the context data may be extracted from data provided in the form set out in the OpenRTB version 2.6 Specification. In some examples, the context data comprises at least the 'required', or the 'required and recommended' attributes set out therein for: 'imp' object/objects, at least one of a 'site' or an 'app' object, a 'device' object and a 'user' object (noting that the recommended attributes may change based on the data content or usage context). In some examples, context data comprises at least some of the 'required', or the 'required and recommended' attributes set out in the specification.

The end user personal data may comprise one or more of demographic data, location data, and behavioural data relating to the end user of a device from which the request originated. The demographic data may comprise one or more of an end user age, an end user gender, an end user income level, an end user education, and the like. The location data may comprise one or more of an end user Global Position System (GPS) coordinate, an end user Internet Protocol (IP) address, an end user country, an end user city, and an end user postal code. The behavioural data may comprise one or more of an end user browsing history, an end user search query, an end user purchase history, and other end user behavioural data.

The end user device data may comprise one or more of an end user device type, an end user device operating system, end user device browser information, an end user device identifier, and an end user device screen resolution relating to the end user device from which the request originated. The end user device type may comprise one or more of mobile, desktop, tablet, and another end user device type. The end user device operating system may for example comprise one or more of iPhone Operating System (IOS), Android, Windows, Mac Operating System (macOS), and another end user device operating system. The end user device browser information may comprise one or more of a type of browser that the end user is using and a version of the browser that the end user is using. The end user device identifier may comprise one or more of an Identifier for Advertisers (IDFA) device identifier, a Google Advertising Identifier (GAID) device identifier, and another end user device identifier. The end user device screen resolution may comprise one or more of an end user device screen dimension and an end user device screen pixel density.

The display data may comprise one or more of a Uniform Resource Locator (URL) of a webpage where content is to be embedded, or has been displayed, or the identity of a program or app into which the content is to be embedded, or has been displayed, page content data, and content placement data. The page content data may comprise one or more of a content keyword, a content category, and the like. The content placement data may comprise one or more of a position of the content and a size of the content. The display data may alternatively or additionally comprise data indicative of one or more of an area reserved for an item of data content within a webpage displayed by the end user device and a portion of an application of the end user device that is reserved for the content.

The content data may comprise one or more of a visual content dimension, a content unique identifier, a content format, and content visibility data, relating to how an item of data content provided in response to the request is to be or has been displayed. The content format may comprise one or more of a banner, a video or the like. The content visibility data may comprise one or more of a content visibility metric and a visibility prediction. The term 'content visibility metric' refers to quantitative measurements that indicate how visible a piece of content is or will be to the user. Metrics might include factors like how much of the content will be visible on a screen and for how long. The term 'visibility prediction' describes an estimate or forecast of how visible the content is likely to be when served. Historical data and/or machine learning models may be used to predict the likelihood that the content will be seen by users.

The content format may for example comprise Hyper Text Markup Language (HTML), Joint Photographic Exerts Group (JPEG), and another content format. In cases in which the content format comprises HTML, the HTML code renders one or more of the images of the content and the text of the content.

The website data may comprise one or more of a website identifier, a category of a website, and website information relating to a website in which content may be embedded in response to a request. The mobile app data may comprise one or more of a mobile app identifier, a category of a mobile app, and app information relating to an app in which content may be embedded in response to a request. The site information may comprise one or more of a name of the site and a description of the site. The app information may comprise one or more of a name of the app and a description of the app.

The network data may comprise one or more of an Internet Protocol (IP) address, a connection type, and Internet Service Provider (ISP) data used by the end user of a device from which the request originated. The connection type may comprise one or more of a Wireless Fidelity (Wi-Fi) connection, a cellular data connection, a wired connection, and another connection type. The ISP data may comprise one or more of an ISP name, an ISP location, and other ISP data.

The privacy data may comprise one or more of a consent string and an opt-out flag, which may be set by the end user of a device from which the request originated. The consent string comprises information about user content. For example, the consent string comprises General Data Protection Regulation (GDPR) compliance data. For example, the consent string is usable for one or more of data collection and user content targeting. The opt-out flag may comprise an indicator that the end user has opted out of a data collection practice.

The processing circuitry 102 further comprises a prediction module 110 configured to use the model 106 to determine a predicted response score for requests based on the context data associated therewith. This may for example comprise a numerical output, wherein a higher number may be indicative of a higher level of anticipated response compared to a lower number (or vice versa).

In a particular example, the model may output a real number, between 0 and 1 (although this may be mapped onto a different range, e.g. 0 to 100). In some examples, while the absolute value of the score may not have a direct meaning, the relative value does, such that, for example, a score of 0.7 may be indicative of a lower predicted response level than 0.8.

Typically, end user data might comprise both personally identifiable information (PII) usable to identify the end user and publicly available information. PII may comprise one or more of an end user identifier, an end user location, an end user Internet Protocol (IP) address, an end user telephone number, an end user email address, an end user name, an end user social media handle, and other end user-specific end user data.

However, in some examples herein, but not necessarily, the platform 100 scores the request without using PII regarding the end user. Alternatively, or additionally, the platform 100 scores the request without requiring PII. The platform 100 may score the request without using end user information. Alternatively, or additionally, the platform 100 may score the prediction request without requiring the end user information.

The platform's 100 ability to operate without requiring PII facilitates providing targeted content in geographies with the highest end user privacy standards. The system does not require personal identifiers to operate, which is important for countries with strict privacy standards. Thus, some embodiments of the invention score the request without using the PII.

In some examples the platform 100 may process the context data to remove the PII before scoring requests and/or storing any context data, for example for use as training data.

The processing circuitry 102 further comprises an assignment module 112 which, in use of the platform 100, assigns received requests to one of a control group or a behaviour prediction group. For example, a predetermined proportion of the requests received may be diverted into a control group. This may comprise a relatively small proportion of the requests, for example, 1%, or up to 10%. For example, the requests may be assigned to the control group on a random basis, such that each request has a probability of being assigned to the control group, or for example based on the order in which requests are received (e.g. every nth request is assigned to the control group, where n is an integer), or may be assigned in some other way.

In this example, the prediction module 110 only acts on the requests assigned to the behaviour prediction group, and not on those assigned to the control group. When the request is assigned to the behaviour prediction group, the prediction module 112 is configured to determine a predicted response score for the request. In some examples, as discussed below, the requests in the control group may be assigned a 'dummy' response score (e.g. randomly, and/or based on determined predicted response scores) by the optional control group module 120, although this need not be the case in all examples.

The processing circuitry 102 of the platform 100 further comprises a monitoring module 114. The monitoring module 114 is configured to receive data indicative of user reactions to items of content exposed to a plurality of users in response to the requests, and to compare a level of user reaction associated with requests assigned to the control group with a level of user reaction associated with requests assigned to the behaviour prediction group. For example, the data indicative of user reactions may comprise any or any combination of the data indicative of user response to data content as described above. In some examples, the data indicative of user reactions to items of content is a binary value. For example, if a 'click' on the item of content is detected within a predetermined time period, a positive indication may be returned from the user device (for example, from software displaying the item of content). If the time period elapses without a click, a negative indication may be returned. In other examples, the user may be asked for a positive or negative indication, for example, a survey asking if the content is of use, which could return a yes or a no. In other examples, a positive or negative response could be returned in some other ways, as discussed elsewhere herein. In some examples, the return is not binary, but may be any metric based on, for example, the length of a period of time for which the user viewed or interacted with the content, with a scale of values. In such cases the non-binary response may be converted into a binary response, for example by setting a threshold.

The processing circuitry 102 of the platform 100 further comprises an assessment module 116, which is configured to assess the performance of the platform 100 based on the comparison to provide a platform score. For example, this may allow a determination to be made as to whether the response of the behaviour prediction group exceeds the level of reaction of the control group as this may indicate that the platform is functioning as intended.

The processing circuitry 102 of the platform 100 further comprises a transmission module 118 configured to, based on at least one of the predicted response score for the request and the platform score, determine and execute a processing plan for each request.

In some examples, the processing plan comprises associating the predicted response score with a request, and forwarding or replying to the request with the predicted response score. For example, if the request is received from a data requesting server, or from a user device, a request may be associated with the predicted response score (or in some cases a dummy score) and forwarded on to a data provision server. The data provision server may use the score to determine what data content, if any, to provide in response to the request. In other examples, for example if the request is received from a data provision server, a reply to the request may comprise the predicted response score for that request. In some cases, a dummy score and/or an indication that the request has been assigned to the control group may be provided.

In some embodiments, the transmission module 118 is configured to determine if the predicted response score meets a first threshold. The processing plan may be determined based on whether or not the first threshold is met.

In one example, the processing plan comprises forwarding the request to a data provision server (wherein the data provision server is configured to provide items of data content to user devices) if the predicted response score meets the first threshold, and, if the predicted response score does not meet the first threshold, not forwarding the request for content to the data provision server. In this way, the platform 100 can act as a filter, only forwarding on requests which are expected to result in a predetermined level of response. This may be a relatively high level of response. This may therefore terminate requests which are unlikely to result in an item of content which is of use or of interest being provided to a user.

In some such examples, the processing plan for requests assigned to the control group (which may not be associated with a predicted response score) may be to transmit (all) such requests. Thus, the data provision server may be provided with requests which meet the first threshold, and control group requests.

In another example, if the predicted response score meets the first threshold, the transmission module 118 may determine and execute a processing plan comprising sending a recommendation to a data provision server to provide an item of data content in response to the request and if the predicted response score does not meet the first threshold, not sending a recommendation with respect to the request for content to the data provision server. In such cases, not sending the recommendation may comprise not sending any indication to the data provision server, whereas in other examples, it may comprise sending an acknowledgement of the request, but no recommendation, or a recommendation not to provide an item of data content in response to the request. In some such examples, the processing plan for requests assigned to the control group (which may not be associated with a predicted response score) may be to send a recommendation to provide items of data content in response to such requests.

In some examples, the first threshold comprises a threshold based on the distribution of predicted response scores. For example, a distribution of the scores may be determined and requests associated with scores in the top quartile, or top decile (10%) or the like may be determined to meet the first threshold. This may be relative to scores determined in a preceding time period of a predetermined length, or over a predetermined number of previous scores, or in some other way. In other examples, the first threshold may be determined based on the absolute value of the score (e.g. where the score may be between 0 and 1, scores above 0.8 may be determined to meet the first threshold).

In some examples, the assessment module 116 is further configured to score the performance based on the comparison to determine a platform score and to compare the platform score to a second threshold, and, if the platform score does not meet the second threshold, adjust the first threshold. For example, the threshold may initially be set at a moderate level. However, if the platform is performing relatively poorly, the threshold may be increased. Conversely, it may be indicated that the threshold is set too high, and in such cases the threshold may be reduced.

The platform performance may be assessed based on any predetermined metric indicative of a difference in reaction levels between the two groups and the second threshold may be a target difference between the groups.

In some examples, the second threshold may be a target 'uplift' metric, wherein the uplift may be defined as:

$$\text{uplift} = \frac{behaviour\ prediction\ group\ performance}{control\ group\ performance} - 1$$

where performance can be defined by any metric, for example any or any combination of user reactions or responses described above. The uplift in this case serves as the score for the performance.

To consider a particular example, the 'performance' may be an average click rate. The average click rate may be an average click count per user to a plurality of data items. For any given item of content, this may have a value of 1 if a user clicks on it or 0 if not. In this example, that rate may be 1.1 %, for the behaviour prediction group, i.e, on average 11 out of every 100 data content exposure events results in a click on the data content. The rate for the control group may be 1%. This is a 10% uplift ((0.011/0.01) - 1 = 0.1). The second threshold may be a target uplift. For example, if the target uplift in this case is 20%, then the second threshold is not met, and the first threshold may be increased. For example, if the first threshold was set to forward or recommend the top 20% of scores, this may be adjusted to be the top 10%.

The score (e.g. the uplift metric, or some other metric) may be reevaluated periodically, in some examples based on items of data content distributed and/or use reaction notifications received in a predetermined time period, which may be a rolling time period (e.g. the last day, or the last hour, or the like) to allow the system to be responsive to changes in behaviour in the behaviour prediction group and/or in the control group.

In some examples, the assessment module 116 may adjust the first threshold based on the difference between the platform score and the second threshold.

In some examples, the assessment module 116 may adjust the first threshold by identifying a level of user reaction which results in the second threshold being met. For example, the items of data content which are sent in response to requests in the behaviour prediction group may be placed into bins based on the predicted response scores for the requests which resulted in the item of data content being distributed. For example, a first bin may comprise responses related to requests which were scored greater than or equal to 0 and less than 0.01, a second bin may comprise responses related to requests which were scored greater than or equal to 0.01 and less than 0.02, a second bin may comprise responses related to requests which were scored greater than or equal to 0.02 and less than 0.03, etc. The number of bins may be determined based on the amount of data available, with more bins being appropriate as the amount of data increases.

This data could be used to plot a curve based on the performance metric for all items of data content in that bin, and by integrating the curve, the performance metric for any score may be determined. A desired performance metric associated with the second threshold (i.e. in the example above, the uplift metric) may be identified from this curve. This score may provide the adjusted first threshold. The first threshold may be adjusted periodically (or even substantially continuously) as more data is gathered, and as behaviour changes in the behaviour prediction group and/or the control group, such that the target relative performance between the groups can be achieved.

While the bins started from a score of 0 in this example, in examples where requests relating to such scores are filtered out, the bins relating to low scores may be omitted, or may be unpopulated. The data may be placed into bins using a library function, for example a function such as cut or quantcut from the Pandas library in Python, where cut splits the data into n equal width bins, Qcut splits the data into n equal population bins.

Another example method may be based on a 'binary chop' method. For example, an initial adjustment step may be set as 5%. If performance (e.g. an uplift metric) is too low, the first threshold may be increased by the step size or 50% of the space available, whichever is the larger. If the performance is too high, the first threshold may be reduced by 5%. A new performance may be measured and if the performance needs to be adjusted in the same direction, the step size may be maintained. However, at any point, if the performance needs to be adjusted in the opposite direction, then the step size may be reduced, for example by 50%. This may be repeated until convergence, with the step size decreasing by e.g. 50% each time (5%, 2.5%, 1.25%, etc).

In some examples, processing circuitry 102 of the platform 100 further comprises a control group module 120 (shown in dotted outline to indicate it is optional). The control group module 120 may be configured to assign a value to requests assigned to the control group in any way other than using the model 106. For example, the score may comprise one or more of a random score, a fixed score, and a score that the prediction server chooses in any other way to represent not applying the output from the model 106.

In a particular example, the control group module 120 may be configured to assign a value to requests assigned to the control group based on a random number drawn from a distribution of predicted response scores. The distribution of predicted response scores may comprise a distribution of predicted response scores above a threshold (e.g. the first threshold, or the current first threshold). This value may be configured to appear as a dummy 'score' for the requests assigned to the control group, which may in turn allow requests in the control group to be subsequently processed in a manner which is identical to the requests in the behaviour prediction group, which may improve the impartiality of the result. In particular, as mentioned above, the processing plans may comprise forwarding requests and/or sending a recommendation or reply to a request in which the reply or forwarded request comprises the predicted response score or, in the case of requests assigned to the control group, the assigned value which serves as a dummy predicted response score. The distribution may have the mean and standard deviation of the predicted response scores.

In some examples, the processing circuitry 102 of the platform 100 comprises a survey module 122 and/or a training module 124 (shown in dotted outline to indicate they are optional).

A survey module 122 may be configured to send a request for a response to each of a plurality of surveyed end user devices, wherein the request for a response comprises a request for a response to an item of data content; and receive a response to the request from each of a plurality of surveyed end user devices and store the response in association with context data indicative of a context in which the item of data content was exposed to the end user as training data. The end users may for example be associated with end user identifiers, which may be provided as context data and used to target a user who is known to have been sent a particular data item. The context data may be acquired from the request which resulted in the item of data content being sent to the user.

A training module 124 may be configured to train the machine learning model based on the training data. For example, in this example, the model is based on boosted ensemble techniques, such as xgboost or CatBoost or GBM models. Many other techniques, for example standard supervised learning techniques, support vector machines, neural networks, deep learning, logistic regression, or Deep Learning networks are possible, but may indicate a relatively larger amount of training data than boosted ensemble techniques.

As briefly outlined above, the training data may be gathered from a plurality of (preferably at least around 200) data distribution programs, wherein each data distribution program relates to different data content. In particular, the subject matter of the data may be chosen so as to be diverse. For example, it may be selected such that different programs are likely to appeal to, or are directed to, people in different socioeconomic groups and/or different geographical regions, or are diverse in any other way, which may be determined or inferred from context data. Preferably, the model may be trained using data from a first set of data distribution programs and validated, or tested, using response data gathered from a data distribution program which is not included in the first set of data distribution programs. Assuming the model passes the validation (i.e. the predicted response scores sufficiently closely correspond to the actual response levels), it may be assumed that the model is suitably generic. Thus, in some examples, data relating to a particular data distribution program may be assigned to one of the training data or the validation/testing data, but not split between the two.

The training data may be provided as a set of training data entries, each entry related to a particular item of displayed data, wherein the item was displayed on a particular user's device. Each entry comprises a plurality of context variables. The context variables represent any items of context data as described above, i.e. variables representing one or more of end user personal data, end user device data, content data, website data, mobile app data, network data, and privacy data. In some examples, each training data entry comprises at least 10 context variables, and in some examples around 50 context variables. In some examples, the context variables are extracted from a request for data which resulted in the data being exposed to the user. In some examples, the context variables comprise data according to data categories set out in the OpenRTB version 2.6 specification. In some examples, each item of training data comprises fields defining at least the 'required', and/or the 'required and recommended' attributes set out in the OpenRTB version 2.6 Specification for: 'imp' object/objects, at least one of a 'site' or an 'app' object, a 'device' object and a 'user' object as set out (noting that the recommended variables may change based on the data content or usage context). In soime examples, each item of training data comprises at least the 'required', and/or the 'required and recommended' attributes set out in the OpenRTB version 2.6 Specification. Data which is likely to be different for every user and/or every request (e.g. ID data) may be omitted.

Each training data entry also comprises data indicative of user response to the item data content to which a user has been exposed. For example, this may comprise survey data, where a user who has been exposed to data is asked directly for a response to the data, for example a question to discover if the data item is likely to impact their behaviour. This may return a binary value- for example a 0 if there is no likely impact, or 1 if there is a likely impact. In other examples, the value may be any scalar value. In some examples, there may be more than one metric associated with the user response, for example metrics relating to any or any combination of clicks, determination of gaze direction, clickthroughs, subsequent web browsing activity, duration of time for which the content was exposed to a user, survey data (e.g. a user response to a survey asking if they recall an item of data content and/or any indication that they responded to a message therein) or the like. In some examples, such metrics may be, or may be converted to, a binary value.

The training data may comprise at least 1000 entries for each of around 200 data distribution programs, or a total of around 200,000 training data entries. In some examples the training data is for a predetermined time period, for example a preceding 12 month period.

Once the model 106 has been trained, context variables of a newly received request to be assessed may be extracted. These may relate to the same set of context data items as formed the training data, and provide the context data for the request. The model may then predict the response score of the user from which the request originates using the model. For example, as described above, this may be a value between 0 and 1, wherein the relative scores are indicative of relative predicted levels of response.

It may be noted that, where survey data is used to train the model, this may generally be associated with user consent. However, in examples herein, the survey data may be used to predict a response for users who have not consented in this same way. Moreover, in some examples, the context variables may be selected so as to avoid PII, so that when a request is subsequently submitted to the model, such data may also be omitted, and again user consent requirements may be reduced. In some examples, PII may be removed from a request before data is used for training and/or provided to the model to produce a prediction.

Such a model 106 may be able to determine a predicted response score even for an end user having no survey end user data. That is, the model 106 can be used to extrapolate the obtained survey results to the remainder of the population who were not surveyed. For example, the model 106 may determine or infer that presence of certain features in the context data is associated with an increased likelihood of an end user responding positively to a survey question. The presence, or otherwise, of these features in the context data of an unsurveyed end user enables the model 106 to estimate a likelihood of any individual end user to respond positively to the survey question, whether or not that user's previous response had been included in training data.

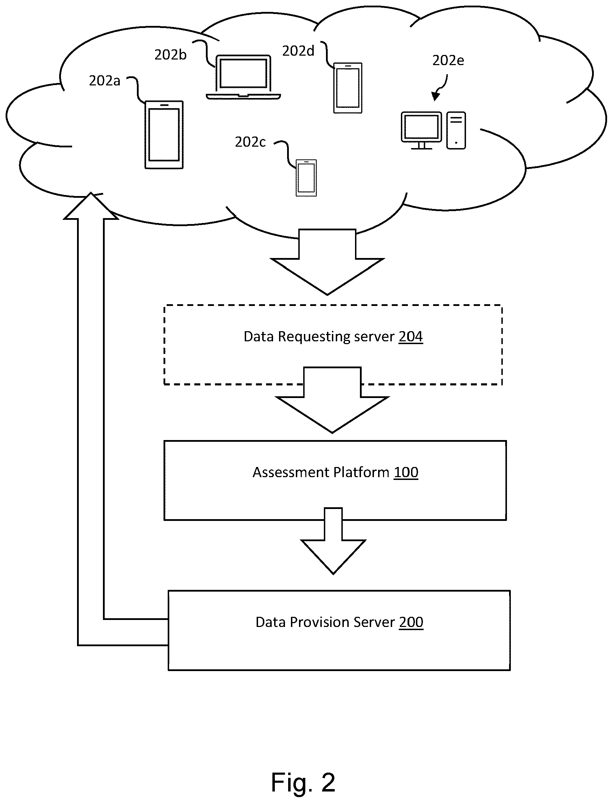

Figure 2 shows an example of a system 200 in which the platform 100 may operate. In this example, the system 200 comprises a plurality of end user devices 202a-e, which may comprise any or any combination of mobile telephones, tablets, desk top computers, laptop computers, wearable devices such as smart watches, Smart Televisions, Smart assistants, Internet of Things (IoT) devices, or the like.

In some examples, requests for content may originate from such devices, and may be passed to a content requesting server 204, which may in turn pass the requests to the platform 100. In other examples, requests for content originating from such devices may be passed directly to the platform 100. In still further examples, the requests for content may be passed to the platform 100 via a data provision server 206, or via some other entity.

In some examples, the platform 100 filters the requests based on the predicted response score, for example based on them receiving a predetermined predicted response score, and passes a filtered subset of requests to the data provision server 206. In some examples, the platform 100 applies a recommendation to a subset of requests, for example based on them receiving a predetermined predicted response score and forwards the requests to the data provision server 206. In some examples, the request may be updated with a binary value instructing the data provision server 206 to fulfil or reject the request, based on whether or not a threshold score is met. In some examples, the platform determines a predicted response score for each request, associates that score with the request, and forwards the request to the data provision server 206. The platform 100 may score the requests in real time.

The data provision server 206 may then provide an item of data content in response to a request from the user end device 202a-e. In some examples, the data provision server 206 may do this selectively based on the score and/or recommendation associated therewith. The item of data content may be sent directly to the user device 202a-e, or via at least one intermediary, for example the data requesting server 204. In some examples, the data provision server 206 may decide which request to respond to based on a human created set of rules to select the best requests, for example based on the score.

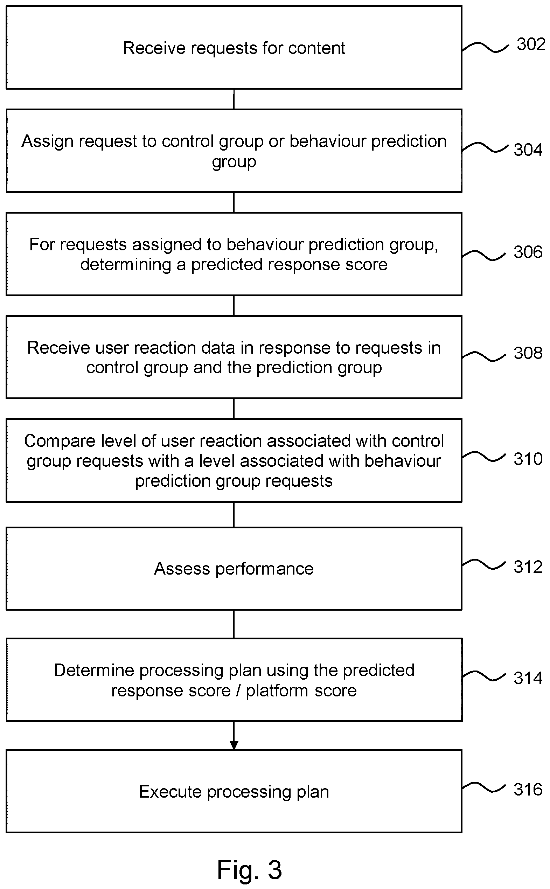

Figure 3 is an example of a method of determining processing plans for requests for data. The method comprises, by processing circuitry (for example by a platform 100 as described in relation to Figure 1), receiving a plurality of requests for content from user devices, wherein each request is associated with a context in which the content is to be exposed to a user (block 302). The request may have any of the attributes described above, for example the context may comprise any or any combination of the context data described above, and carrying out block 302 may comprise carrying out any of the actions associated with the data receiving module 108.

In block 304, the request is assigned to one of a control group or a behaviour prediction group. For example, 1% (or n%) of requests may be randomly selected and assigned to the control group, as described above. Carrying out block 304 may comprise carrying out any of the actions described in relation to the assignment module 112.

Block 306 comprises, for requests assigned to the behaviour prediction group, determining a predicted response score for each request using a trained machine learning model based on the context associated therewith. As described above, the model has been trained using training data comprising (i) data indicative of user response to data content to which each of plurality of users has been exposed and (ii) context data indicative of a context in which the data content was exposed to each user, and wherein the model is trained to predict a response score indicative of a predicted level of user response to data content based on an input, the input comprising context data indicative of the context in which the data content is to be exposed to a user as provided in the request. Carrying out block 306 may comprise carrying out any of the actions described above in relation to the prediction module 110.

In some examples, the method may comprise assigning a value to requests assigned to the control group. For example, this may be based on a random number drawn from a distribution of predicted response scores.

Block 308 comprises receiving data indicative of user reactions to items of content exposed to a plurality of users in response to requests in the control group and the behaviour prediction group. For example, this may comprise 'click' data, other attention data, one or more survey response or the like. Carrying out block 308 may comprise carrying out any of the actions described in relation to the monitoring module 114.

In block 310, a level of user reaction associated with requests assigned to the control group is compared with a level of user reaction associated with requests assigned to the behaviour prediction group and block 312 comprises assessing the performance based on the comparison to provide a platform score. Carrying out blocks 310 and 312 may comprise carrying out any of the actions described above in relation to the assessment module 116.

Block 314 comprises determining, based on at least one of the predicted response score for the request and the platform score, a processing plan for each request; and block 316 comprises executing the processing plan for each request. Performance of these blocks may comprise carrying out any of the actions associated with the assessment module transmission module.

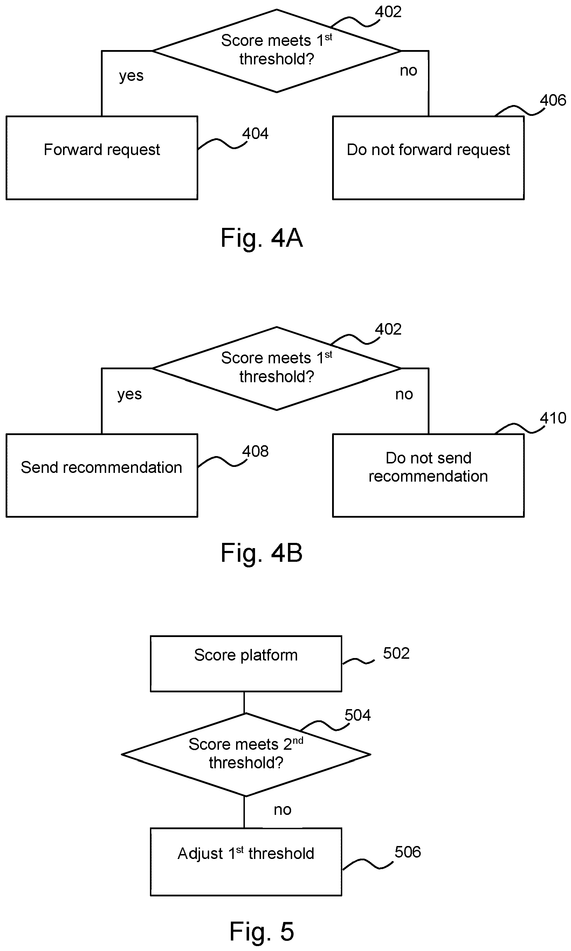

Figure 4A and 4B represent alternative methods associated with example processing plans, and which may be used in association with the method of Figure 5.

In Figure 4A, block 402 comprises determining if the predicted response score meets a first threshold. If so, the method comprises in block 404, determining a processing plan comprising forwarding the request to a data provision server and if not, the method comprises in block 406 not forwarding the request for content to the data provision server.

Figure 4B also comprises block 402. However, in this example if the predicted response score meets a first threshold, block 408 comprises sending a recommendation to a data provision server to provide an item of data content in response to the request and if not block 410 comprises not sending a recommendation with respect to the request for content to the data provision server.

The first threshold may in some examples comprise a threshold based on the distribution of predicted response scores (e.g. the top n% of scores, or the top n% of scores determined within a particular predetermined time frame, such as the previous hour). In other examples, a predetermined score may be used as the first threshold.

Figure 5 is an example of adapting the first threshold. For example, a threshold for transmitting or recommending a request may be adapted based on the performance of the platform, for example given the associated threshold.

The method comprises, in block 502, scoring the platform performance based on the comparison between the reaction level of the behaviour prediction group and the control group to determine a platform score as described in relation to block 310 (e.g. determine an uplift metric or the like) and, in block 504, comparing the platform score to a second threshold. If the platform score does not meet the second threshold, the method comprises adjusting the first threshold in block 506. Otherwise, the method may be repeated periodically. The comparison may be based on requests sent in a predetermined time period. As described above, adjusting the first threshold may comprise comprising adjusting the first threshold so as to result in the second threshold being met, based on previous behaviour. The method may be carried out periodically, to adjust to changes in behaviour in the control group and/or behaviour predication group.

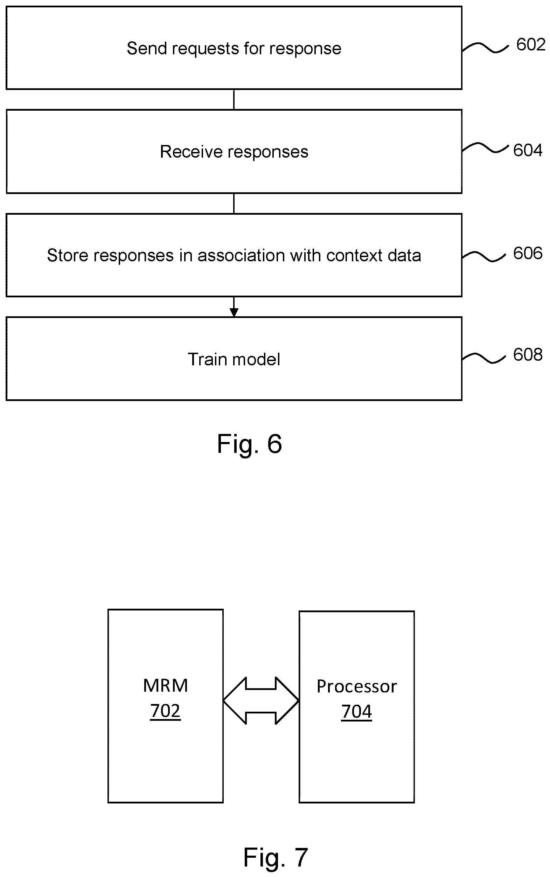

Figure 6 comprises a method of training the model 106. The method comprises, in block 602, sending a request for a response to each of a plurality of surveyed end user devices, wherein the request for a response comprises a request for a response to an item of data content, for example an item of data content sent in response to a request for data content. Block 604 comprises receiving a response to the request from each of a plurality of surveyed end user devices.

In block 606, the response is stored in association with context data indicative of a context in which the item of data content was exposed to the end user as training data. In some examples, prior to being stored as training data, PII may be removed therefrom. Training the model without PII means that the model can predict response scores again without the use of PII. The context data may comprise any of the attributes described in relation to the training module 124.

Block 608 comprises training the machine learning model based on the training data.

Figure 7 shows an example of a machine readable medium (MRM) 700 associated with a processor 702. The MRM 700 stores instructions to cause the processor 702 to carry out tasks. For example, the instructions may comprise instructions to cause the processor 702 to carry out the method of Figure 3, and/or to act as the platform 100 described in relation to Figure 1 (with or without any of the optional modules). In some examples, the instructions may comprise instructions to cause the processor 702 to carry out at least one method block of Figure 4A, 4B, 5 or 6.

Advantages of embodiments of the invention include that a predictive model is not built for a specific item of data content, as most prior art systems do, but instead, embodiments of the invention provide a generic predictive model, harvested from historic data, the generic predictive model configured to estimate end user response levels. Moreover, there is no requirement that the end user of interest be previously seen in order for embodiments of the invention to be able to build the generic predictive model.

A yet other advantage of embodiments of the invention is that the system can operate without using personally identifiable information (PII) regarding the end user. Still a further advantage of embodiments of the invention is that the system can operate without requiring PII. A still further advantage of embodiments of the invention is that this feature facilitates providing content in geographies with the highest end user privacy standards.

While the above representative embodiments have been described with certain components in exemplary configurations, it will be understood by one of ordinary skill in the art that other representative embodiments can be implemented using different configurations and/or different components. For example, it will be understood by one of ordinary skill in the art that the order of certain steps and certain components can be altered without substantially impairing the functioning of the invention.

The representative embodiments and disclosed subject matter, which have been described in detail herein, have been presented by way of example and illustration and not by way of limitation. It will be understood by those skilled in the art that various changes may be made in the form and details of the described embodiments resulting in equivalent embodiments that remain within the scope of the invention. It is intended, therefore, that the subject matter in the above description shall be interpreted as illustrative and shall not be interpreted in a limiting sense.

**Claims**

1. An assessment platform comprising processing circuitry and a machine readable memory,

   wherein the memory is configured to store a trained machine learning model, wherein the model has been trained using training data comprising (i) data indicative of user responses to data content to which a plurality of users have been exposed and (ii) context data indicative of a context in which the data content was exposed to each user, and wherein the model is trained to predict a response score indicative of a predicted level of user response to data content based on an input, the input comprising context data indicative of the context in which the data content is to be exposed to a user;
   the processing circuitry comprising:

      a data receiving module configured to receive a plurality of requests for content from user devices, wherein each request is associated with context data indicative of a context in which the content is to be exposed to a user,
      a prediction module configured to use the model to determine a predicted response score for requests based on the context data associated therewith;
      an assignment module configured to assign the request to one of a control group or a behaviour prediction group, wherein when the request is assigned to the behaviour prediction group, the prediction module is to determine a predicted response score for the request;
      a monitoring module to receive data indicative of user reactions to items of content exposed to a plurality of users in response to the requests, and to compare a level of user reaction associated with requests assigned to the control group with a level of user reaction associated with requests assigned to the behaviour prediction group;
      an assessment module configured to assess the performance of the platform based on the comparison to determine a platform score; and
      a transmission module configured to, based on the predicted response score for the request and the platform score, determine and execute a processing plan for each request.

2. The assessment platform of claim 1 wherein:

   the transmission module is configured to determine if the predicted response score meets a first threshold; and wherein the processing plan comprises:

      if the predicted response score meets the first threshold, forwarding the request to a data provision server, wherein the data provision server is configured to provide items of data content to user devices, and
      if the predicted response score does not meet the first threshold, not forwarding the request for content to the data provision server.

3. The assessment platform of claim 1 wherein:

   the transmission module is configured to determine if the predicted response score meets a first threshold; and wherein the processing plan comprises:

      if the predicted response score meets the first threshold, sending a recommendation to a data provision server to provide an item of data content in response to the request, wherein the data provision server is configured to provide items of data content to user devices, and

if the predicted response score does not meet the first threshold, not sending a recommendation with respect to the request for content to the data provision server.

4. The assessment platform of claim 2 or claim 3 where the first threshold comprises a threshold based on the distribution of predicted response scores.

5. The assessment platform of any of claims 2 to 4 wherein the assessment module is further configured to compare the platform score to a second threshold, and, if the platform score does not meet the second threshold, adjust the first threshold.

6. The assessment platform of claim 5 wherein the assessment module is to adjust the first threshold by identifying a level of user reaction which results in the second threshold being met and setting the first threshold to that level.

7. The assessment platform of any preceding claim, further comprising a control group module, wherein the control group module is to assign a value to requests assigned to the control group based on a random number drawn from a distribution of predicted response scores.

8. The assessment platform of claim 7 wherein the distribution of predicted response scores is a distribution of predicted response scores above a threshold.

9. The assessment platform of any preceding claim wherein the context data comprises one or more of: end user device data, data content data, website data, mobile app data, network data, and privacy data.

10. The assessment platform of any preceding claim wherein the context data does not include end user personal data.

11. The assessment platform of any preceding claim wherein the context data does not include personally identifiable information (PII) regarding the end user.

12. The assessment platform of any preceding claim wherein the data indicative of user responses to data content to which a user has been exposed and/or user reactions comprise any or any combination of: user responses to a survey, user interactions with the item of data content, a duration of user interactions with an item of data content, browsing behaviour, clicks, clickthroughs, an indication of interest in the data content.

13. The assessment platform of any preceding claim further comprising:
a survey module and a training module, wherein:

the survey module is configured to:

send a request for a response to each of a plurality of surveyed end user devices, wherein the request for a response comprises a request for a response to the item of data content;
receive a response to the request from each of a plurality of surveyed end user devices; and
store the response in association with context data indicative of a context in which the item of data content was exposed to the end user as training data;

and the training module is configured to train the machine learning model based on the training data.

14. A method of determining processing plans for requests for data comprising, by processing circuitry:

receiving a plurality of requests for content from user devices, wherein each request is associated with context data indicative of a context in which the content is to be exposed to a user,
assigning the request to one of a control group or a behaviour prediction group,
for requests assigned to the behaviour prediction group, determining a predicted response score for each request using a trained machine learning model based on the context associated therewith, wherein the model has been trained using training data comprising (i) data indicative of user responses to data content to which a plurality of users have been exposed and (ii) context data indicative of a context in which the data content was exposed to each user, and wherein the model is trained to predict a response score indicative of a predicted level of user response to data content based on an input, the input comprising context data indicative of the context in which the data content is to be exposed to a user;

receiving data indicative of user reactions to items of content exposed to a plurality of users in response to requests in the control group and the behaviour prediction group,

comparing a level of user reaction associated with requests assigned to the control group with a level of user reaction associated with requests assigned to the behaviour prediction group;

assessing the performance based on the comparison to provide a platform score;

determining, based on the predicted response score for the request and the platform score, a processing plan for each request; and

executing the processing plan for each request.

15. The method of claim 14 comprising:

determining if the predicted response score meets a first threshold; and
wherein the processing plan comprises:

if the predicted response score meets the first threshold, forwarding the request to a data provision server, wherein the data provision server is configured to provide items of data content to user devices, and
if the predicted response score does not meet the first threshold, not forwarding the request for content to the data provision server.

16. The method of claim 14 comprising:

determining if the predicted response score meets a first threshold; and wherein the processing plan comprises:
if the predicted response score meets the first threshold, sending a recommendation to a data provision server to provide an item of data content in response to the request, wherein the data provision server is configured to provide items of data content to user devices, and
if the predicted response score does not meet the first threshold, not sending a recommendation with respect to the request for content to the data provision server.

17. The assessment platform of claim 15 or claim 16 where the first threshold comprises a threshold based on the distribution of predicted response scores.

18. The method of any of claims 15 to 17 further comprising comparing the platform score to a second threshold, and, if the platform score does not meet the second threshold, adjusting the first threshold.

19. The method of any of claims 14 to 18, further comprising assigning a value to requests assigned to the control group based on a random number drawn from a distribution of predicted response scores.

20. The method of any of claims 14 to 19 further comprising:

sending a request for a response to each of a plurality of surveyed end user devices, wherein the request for a response comprises a request for a response to an item of data content;
receiving a response to the request from each of a plurality of surveyed end user devices;
storing the response in association with context data indicative of a context in which the item of data content was exposed to the end user as training data; and
training the machine learning model based on the training data.

21. A machine readable medium associated with a processor, the machine readable medium storing instructions which, when executed, cause the processor to carry out the method of any of claims 14 to 20.

Assessment Platform 100

Processing Circuitry 102

Data Receiving Module
108

Prediction Module
110

Assignment Module
112

Monitoring Module
114

Assessment Module
116

Transmission Module
118

Control Group Module 120

Survey Module 122

Training Module 124

Memory
104

Trained Machine Learning Model
106

Fig. 1

Fig. 2

Receive requests for content ⟋ 302

Assign request to control group or behaviour prediction group ⟋ 304

For requests assigned to behaviour prediction group, determining a predicted response score ⟋ 306

Receive user reaction data in response to requests in control group and the prediction group ⟋ 308

Compare level of user reaction associated with control group requests with a level associated with behaviour prediction group requests ⟋ 310

Assess performance ⟋ 312

Determine processing plan using the predicted response score / platform score ⟋ 314

Execute processing plan ⟋ 316

Fig. 3

Score meets 1st threshold? 402

yes

no

Forward request 404

Do not forward request 406

Fig. 4A

Score meets 1st threshold? 402

yes

no

Send recommendation 408

Do not send recommendation 410

Fig. 4B

Score platform 502

Score meets 2nd threshold? 504

no

Adjust 1st threshold 506

Fig. 5

```
┌─────────────────────────────────────────────────┐
│                                                   │
│           Send requests for response              │  ⟋ 602
│                                                   │
└─────────────────────────────────────────────────┘
                        │
┌─────────────────────────────────────────────────┐
│                                                   │
│              Receive responses                    │  ⟋ 604
│                                                   │
└─────────────────────────────────────────────────┘
                        │
┌─────────────────────────────────────────────────┐
│                                                   │
│     Store responses in association with context data│  ⟋ 606
│                                                   │
└─────────────────────────────────────────────────┘
                        │
                        ▼
┌─────────────────────────────────────────────────┐
│                                                   │
│                  Train model                      │  ⟋ 608
│                                                   │
└─────────────────────────────────────────────────┘
```

Fig. 6

```
┌──────────────┐              ┌──────────────┐
│              │              │              │
│              │              │              │
│     MRM      │   ⟺          │  Processor   │
│     702      │              │     704      │
│              │              │              │
│              │              │              │
└──────────────┘              └──────────────┘
```

Fig. 7

Europäisches
Patentamt

European
Patent Office

Office européen
des brevets

# EUROPEAN SEARCH REPORT

**Application Number**

EP 24 19 9603

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/053208 A1 (UPSTONE STEPHEN [GB] ET AL) 22 February 2018 (2018-02-22)<br>* paragraph [0087] *<br>* paragraph [0089] *<br>* paragraph [0094] *<br>* paragraph [0096] *<br>* paragraph [0099] - paragraph [0102] *<br>* paragraph [0106] *<br>* paragraph [0112] - paragraph [0114] *<br>* paragraph [0117] *<br>* paragraph [0127] *<br>* paragraph [0129] *<br>* paragraph [0143] *<br>* paragraph [0145] *<br>- - - - - | 1-21 | INV.<br>G06Q30/0203<br>G06N20/00<br>G06Q30/0242 |

**TECHNICAL FIELDS SEARCHED (IPC)**

G06Q
G06N

The present search report has been drawn up for all claims

| Place of search | Date of completion of the search | Examiner |
|---|---|---|
| The Hague | 22 November 2024 | van Praagh, Kay |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 521 327 A1**

## ANNEX TO THE EUROPEAN SEARCH REPORT
## ON EUROPEAN PATENT APPLICATION NO.

EP 24 19 9603

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2024

| Patent document cited in search report | Publication date | Patent family member(s) | Publication date |
|---|---|---|---|
| US 2018053208 A1 | 22-02-2018 | NONE | |

For more details about this annex : see Official Journal of the European Patent Office, No. 12/82

23